# EUROPÄISCHE PATENTSCHRIFT

(11) **EP 3 014 438 B1**
(45) Veröffentlichungstag und Bekanntmachung des Hinweises auf die Patenterteilung: **17.05.2017**
(21) Anmeldenummer: 14735835.2
(22) Anmeldetag: 05.06.2014
(51) Int. Cl.: G06F 1/14, G06F 9/48

(54) **VERFAHREN UND VORRICHTUNG ZUR ZEITRICHTIGEN DATENÜBERGABE AN DIE ZYKLISCHEN TASKS IN EINEM VERTEILTEN ECHTZEITSYSTEM**
METHOD AND APPARATUS FOR DATA TRANSFER TO THE CYCLIC TASKS IN A DISTRIBUTED REAL TIME SYSTEM AT THE CORRECT TIME
PROCÉDÉ ET DISPOSITIF DE TRANSMISSION DE DONNÉES EN TEMPS VOULU AUX TÂCHES CYCLIQUES DANS UN SYSTÈME EN TEMPS RÉEL DISTRIBUÉ

(30) Priorität: 24.06.2013 AT 504122013
(43) Veröffentlichungstag der Anmeldung: 04.05.2016
(73) Patentinhaber: FTS Computertechnik GmbH, 1040 Wien (AT)
(72) Erfinder: POLEDNA, Stefan, A-3400 Klosterneuburg (AT); KOPETZ, Hermann, A-2500 Baden (AT); GLÜCK, Martin, A-2244 Spannberg (AT)
(74) Vertreter: Patentanwaltskanzlei Matschnig & Forsthuber OG
(86) Internationale Anmeldenummer: PCT/AT2014/050129
(87) Internationale Veröffentlichungsnummer: WO 2014/205467

(56) Entgegenhaltungen:
- EP-A1- 2 169 487
- EP-B1- 1 611 519
- DE-T2- 69 909 791
- DE-T5-112006 001 004
- US-A- 6 145 008
- "OSEK/VDX Fault-Tolerant Communication Specification 1.0", OSEK/VDX , 24. Juli 2001 (2001-07-24), XP055142318, Gefunden im Internet: URL:http://portal.osek-vdx.org/files/pdf/s pecs/ftcom10.pdf [gefunden am 2014-09-22]
- "OSEK/VDX Time-Triggered Operating System Specification 1.0", OSEK/VDX , 24. Juli 2001 (2001-07-24), XP002344813, Gefunden im Internet: URL:http://portal.osek-vdx.org/files/pdf/s pecs/ttos10.pdf [gefunden am 2014-09-22]

## Beschreibung

Die Erfindung ein Verfahren zur zeitrichtigen Datenübergabe zwischen zyklischen Tasks in einem verteilten Echtzeitsystem, welches Echtzeitsystem ein Echtzeitkommunikationssystem und eine Vielzahl von Rechnerknoten umfasst, wobei eine lokale Echtzeituhr in jedem Rechnerknoten mit der globalen Zeit synchronisiert ist.

Weiters betrifft die Erfindung ein verteiltes Echtzeitsystem, welches Echtzeitsystem ein Echtzeitkommunikationssystem und eine Vielzahl von Rechnerknoten umfasst, wobei die lokale Echtzeituhr in jedem Rechnerknoten mit der globalen Zeit synchronisiert ist, zum Durchführen eines solchen Verfahrens.

Die vorliegende Erfindung liegt im Bereich der Computertechnik. Sie beschreibt ein innovatives Verfahren, wie in einem verteilten Echtzeitsystem die *a priori* festgelegte zeitliche Abarbeitung einer Menge von parallel arbeitenden Tasks realisiert werden kann.

In vielen Echtzeitanwendungen wird eine gegebene Aufgabenstellung in eine Vielzahl von Tasks unterteilt. Unter einem *Task* wird ein programmgesteuerter abgekapselter Rechenprozess verstanden, der aus gegebenen Eingabedaten und den im Task gespeicherten inneren Zustandsdaten die gewünschten Ausgabedaten und eine neue Version der inneren Zustandsdaten errechnet. Je nach Leistungsfähigkeit des zur Verfügung stehenden Rechnerknotens können auf einem Rechnerknoten ein einziger Task oder eine Anzahl von Tasks (*multi-tasking*) gleichzeitig ausgeführt werden. In einem multi-tasking System ist es die Aufgabe der Vermittlungssoftware (Middleware) und des unterlagerten Betriebssystems eines Rechnerknotens, die benötigte Ressourcen für die Abarbeitung eines Tasks bereit zu stellen, die Kommunikationskanäle zu verwalten und den Task vor unberechtigten Zugriffen anderer Tasks zu schützen.

Die auf Systemebene festgelegte Logik der gegebenen Aufgabenstellung gibt die genaue Reihenfolge der Ausführung der Tasks vor. In einem Echtzeitsystem ist nicht nur die logische Reihenfolge der Task-Abarbeitung sondern auch die präzise zeitliche Einplanung der Tasks von großer Wichtigkeit, damit die Reaktionszeit des Systems minimiert werden kann.

Wenn zum Beispiel in einem System zur autonomen Steuerung eines Fahrzeuges unterschiedliche Sensorsysteme (z.B. optische Kameras, Laser, Radar) die bewegte Umgebung des Fahrzeugs, z.B. einen Fußgänger, beobachten, so muss sichergestellt sein, dass die unterschiedlichen Tasks zur Erfassung der Sensordaten die Umgebung zum gleichen Zeitpunkt beobachten, um ein zu diesem Zeitpunkt konsistentes Abbild der Umgebung bilden zu können. Diese Gleichzeitigkeit ist gegeben, wenn alle Tasks, die auf ein Sensorsystem zugreifen können, die Sensordaten unmittelbar nach Beginn eines neuen Zyklus lesen, da alle Tasks gleichzeitig einen neuen Zyklus beginnen.

Es ist eine Aufgabe der Erfindung, wie in einem verteilten zyklischen zeitgesteuerten Echtzeitsystem die Tasks und die Kommunikation synchronisiert werden können, um eine optimale Reaktionszeit des Systems sicher zu stellen.

Diese Aufgabe wird mit einem eingangs erwähnten Verfahren dadurch gelöst, dass erfindungsgemäß alle periodischen Trigger-Signale *zⁱ_{b}* für den Beginn eines neuen Zyklus *i* in jedem Rechnerknoten gleichzeitig vom Fortschreiten der globalen Zeit abgeleitet werden, wobei diese periodischen Trigger-Signale die Tasks starten, und wobei ein Task die Ausgabedaten der anderen Tasks aus lokalen Eingabespeicherbereichen, die von dem Echtzeitkommunikationssystem beschrieben werden, liest, und wobei ein Task zu einem *a priori* bestimmten individuellen Fertigstellungszeitpunkt *zⁱ_{f}* vor dem Ende eines Zyklus die Ergebnisdaten des laufenden Zyklus in einen lokalen Ausgabespeicherbereich, der dem Kommunikationssystem zugeordnet ist, schreibt, und wobei die Zeitpläne für das zeitgesteuerte Kommunikationssystem so konfiguriert sind, dass die im lokalen Ausgabespeicherbereich vorhandenen Ergebnisdaten eines Tasks während des Zeitintervalls *<zⁱ_{f}, z*^{*i*+1}*_{b}*> in die lokalen Eingabespeicherbereiche der die Daten benötigenden Tasks transportiert werden, sodass am Beginn des folgenden Zyklus diese Ergebnisdaten in den lokalen Eingabespeicherbereichen der Tasks, die diese Ergebnisdaten benötigen, verfügbar sind.

In einem zeitgesteuerten Echtzeitsystem wird die Synchronisation der Tasks, die in unterschiedlichen Rechnerknoten ausgeführt werden, über eine globale Zeitbasis erreicht. Zu diesem Zweck wird die Zeit in eine Anzahl von systemweit synchronisierten Zyklen unterteilt.

Erfindungsgemäß werden zu Beginn eines Zyklus, der vom Fortschreiten der globalen Zeit bestimmt wird, z.B. zum Zeitpunkt *zⁱ_{b}* des Zyklus *zⁱ*, die Sensordaten von allen verteilten Sensoren übernommen. Ein einem Sensor zugeordneter Task nimmt eine Vorverarbeitung der Sensordaten vor und stellt normalerweise die Ergebnisse dieser Vorverarbeitung in einen Ausgabespeicherbereich des Tasks vor Ende des gegenwärtigen Zyklus, z.B. zum Fertigstellungszeitpunkt *zⁱ_{f}* des Zyklus *i*, einem zeitgesteuerten Kommunikationssystem zur Verfügung. In dem Zeitintervall < zⁱf, *z*^{*i*+1}*_{b}*> vor dem Beginn des folgenden Zyklus transportiert das zeitgesteuerte Kommunikationssystem die Ergebnisse zu den Eingabespeicherbereichen der Tasks, die diese Ergebnisse für die weitere Verarbeitung benötigen. Zu Beginn des folgenden Zyklus, zum Zeitpunkt *z*^{*i*+1}*_{b}* stehen somit alle notwendigen Eingabedaten in den spezifizierten Eingabebereichen der folgenden Tasks zur weiteren Verarbeitung zur Verfügung.

In der recherchierten Patenliteratur [1,2] wurde kein Verfahren gefunden, dass die hier offen gelegte Innovation vorwegnimmt.

Die veröffentlichte Patentanmeldung EP 2 169 487 offenbart ein Verfahren zur zeitrichtigen Datenübergabe zwischen zyklischen Tasks in einem verteilten Echtzeitsystem mit einem Echtzeitkommunikationssystem und einer Vielzahl von Rechnerknoten, wobei eine lokale Echtzeituhr in jedem Rechnerknoten mit der globalen Zeit synchronisiert ist. Bei dem Verfahren werden alle periodischen Trigger-Signale für den Beginn eines neuen Zyklus in jedem Rechnerknoten gleichzeitig vom Fortschreiten der globalen Zeit abgeleitet, und starten diese periodischen Trigger-Signale die Tasks. Ein Task liest die Ausgabedaten der anderen Tasks aus lokalen Eingabespeicherbereichen, die von dem Echtzeitkommunikationssystem beschrieben werden, und schreibt vor dem Ende eines Zyklus die Ergebnisdaten des laufenden Zyklus in einen lokalen Ausgabespeicherbereich, der dem Echtzeitkommunikationssystem zugeordnet ist. Die Zeitpläne für das zeitgesteuerte Echtzeitkommunikationssystem sind so konfiguriert, dass die im lokalen Ausgabespeicherbereich vorhandenen Ergebnisdaten eines Tasks in die lokalen Eingabespeicherbereiche der die Daten benötigenden Tasks transportiert werden, und am Beginn des folgenden Zyklus in den lokalen Eingabespeicherbereichen der Tasks, die diese Ergebnisdaten benötigen, verfügbar sind.

Vorteilhafte Ausgestaltungen des erfindungsgemäßen Verfahren bzw. des erfindungsgemäßen Echtzeitsystems, welche für alleine oder in einer beliebigen Kombination realisiert sein können, sind im Folgenden aufgeführt:
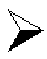 ein Task setzt nach dem Start einen Alterungsindex auf Null und schreibt den aktuellen Wert des Alterungsindex zusätzlich zu den Ergebnisdaten in den Ausgabespeicherbereich, der dem Kommunikationssystem zugeordnet ist; Da die Verarbeitungsdauer eines Tasks datenabhängig ist, wird das Ergebnis eines Tasks mit einem Alterungsindex versehen der angibt, ob eine Verzögerung in der Task Bearbeitung aufgetreten ist. Die Trennung der zeitlichen Planung der Tasks und der zeitgesteuerten Kommunikation von der Verarbeitungslogik innerhalb eines Tasks ermöglich eine flexible Allokation der Tasks auf die vorhandene verteilte Hardware Architektur;
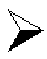 ein Task, der zu dem *a priori* bestimmten Fertigstellungszeitpunkt zⁱf vor dem Ende eines Zyklus *i* die Ergebnisdaten des laufenden Zyklus nicht bereit stellen kann, erhöht den Alterungsindex um eins und stellt die Ergebnisdaten zum Fertigstellungszeitpunkt *z*^{*i*+1}*_{f}* des folgenden Zyklus in den Ausgabereich;
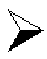 alle Tasks, die auf ein Sensorsystem zugreifen können, lesen die Sensordaten zu Beginn eines neuen Zyklus gleichzeitig;
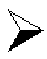 die Fertigstellungszeitpunkte der Tasks sind gestaffelt;
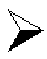 dem Task mit dem größten Verarbeitungsaufwand wird der späteste Fertigstellungszeitpunkt und damit das längste Verarbeitungsintervall zugewiesen;
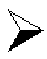 alle zeitgesteuerten Ereignisse sind *sparse events*;
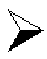 die interne globale Zeit ist mit einer externen Zeitbasis synchronisiert;
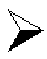 die auf Systemebene festgelegte zeitliche Abarbeitungsreihenfolge der kooperierenden Tasks und die Task Software wird nicht verändert, wenn die *Hardware-Allokation* eines oder mehrerer Tasks verändert wird;
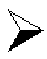 mehrere Kopien eines Tasks werden gleichzeitig auf unterschiedlichen Rechnerknoten ausgeführt.

Die vorliegende Erfindung wird an Hand der folgenden Zeichnung erörtert. In dieser zeigt
Fig. 1 den Aufbau eines multi-tasking Rechnerknoten,
Fig. 2 ein verteiltes Echtzeitsystem mit drei Rechnerknoten, und
Fig. 3 den zeitlichen Ablauf der Abarbeitung von Tasks.

Das folgende konkrete Beispiel zeigt eine der vielen möglichen Realisierungen des neuen Verfahrens.

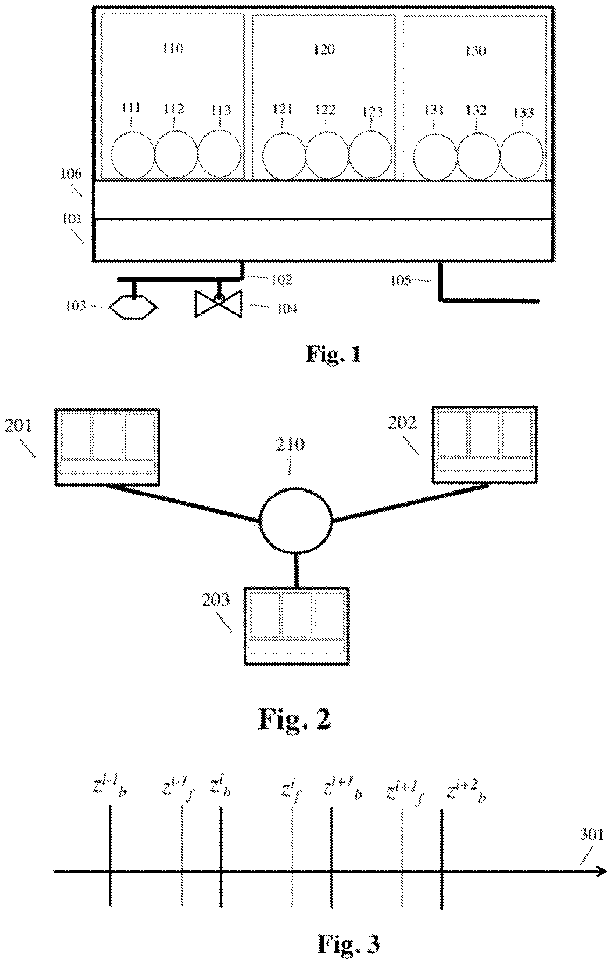

In Fig. 1 ist ein physikalischer Rechnerknoten dargestellt, dem drei Tasks, die Tasks **110, 120** und **130,** zugeteilt wurden. Diese drei Tasks werden von einer *Middleware* und einem *Be-triebssystem* **106** verwaltet. Die *Hardware* des Rechnerknotens **101** ist über einen *Sensorbus* **102** mit einem Eingabesensor **103** und einem Aktuator **104,** sowie über einen Kommunikationskanal **105** mit einer zeitgesteuerten Nachrichtenverteilereinheit **203** (siehe Fig. 2) verbunden. Jeder Task verfügt über drei Speicherbereiche. Der Task **110** verfügt über den Eingabespeicherbereich **111,** den inneren Zustandsspeicher **112** und einen Ausgabespeicherbereich **113.** Der Eingabespeicher **111** des Tasks **110** ist auch der Ausgabespeicher des Echtzeit-Kommunikationssystems. Da zeitgesteuerte Zustandsdaten übertragen werden, ist im Echtzeit-Kommunikationssystem keine Warteschlangenverwaltung erforderlich. Jede neue Version einer Zustandsnachricht überschreibt die alte Version [6, p.91], die im Eingabespeicherbereich **111** steht. Der innere Zustandsspeicher **112** enthält jene Daten, die von dem vorangegangenen Zyklus an den folgenden Zyklus des Tasks **110** übergeben werden. Der Zustandsspeicher **112** wird unmittelbar nach Beginn eines Zyklus gelesen und unmittelbar vor Beginn des Folgezyklus mit den neuen Werten beschrieben. Der Ausgabespeicherbereich **113,** der vor Ende des Zyklus *i* zum Fertigstellungszeitpunkt *zⁱ_{f}* beschrieben wird, beinhaltet die Resultate des Tasks **110** im Zyklus *i.* Im Intervall < *zⁱ_{f}*, *z*^{*i*+1}*_{b}* > überträgt das Echtzeit-Kommunikationssystem die Resultate aus dem Ausgabespeicherbereich **113** mit einer *Ergebnisnachricht* in den Eingabespeicher jener Tasks, die diese Daten im folgenden Zyklus benötigen.

Die Tasks **120** und **130** verfügen, analog zum Task **110,** ebenfalls über je drei Speicherbereiche.

In Fig. 2 ist ein verteiltes Echtzeitsystem, bestehend aus den drei Rechnerknoten **201, 202** und **203** und einer Nachrichtenverteilereinheit **210** dargestellt. Die Nachrichtenverteilereinheit, die Kontroller, insbesondere Kommunikationskontroller in den Rechnerknoten und die Verbindungen zwischen der Nachrichtenverteilereinheit und den Rechnerknoten bzw. deren Kontrollern bilden das Echtzeitkommunikationssystem. Die drei Rechnerknoten **201, 202** und **203,** die entsprechend Fig. 1 aufgebaut sind, kommunizieren mittels Zustandsnachrichten, die von der zeitgesteuerten Nachrichtenverteilereinheit **210** zu *a priori* bestimmten Zeitpunkten vermittelt werden. TTEthernet [4] ist ein Beispiel für ein solches zeitgesteuertes Kommunikationssystem.

Fig. 3 zeigt den zeitlichen Ablauf aufeinander folgender Zyklen. Auf der Abszisse **301** ist das Fortschreiten der globalen Zeit dargestellt. Zu den Zeitpunkte *zⁱ⁻¹_{b}*, *zⁱ_{b}*, *z*^{*i*+}*¹_{b}* und *z*^{*i*+2}*_{b}* werden von der globalen Zeit die *Trigger Signale* für einen neuer Zyklus gleichzeitig in allen Rechnerknoten des verteilten Echtzeitsystems abgeleitet und mit diesen Trigger Signalen die Tasks gestartet.

Die Gleichzeitigkeit der Aktionen wird über die interne globale Zeit erreicht. Die Präzision (*precision*) der globalen Uhrensynchronisation bestimmt die Granularität der internen globalen Zeit und damit den minimalen Abstand zwischen *sparse events* [3, p.64]. Vorteilhafterweise sind alle zeitgesteuerten Aktionen, wie der Beginn eines Zyklus oder das Senden einer Nachricht *sparse events.* Nur wenn in einem verteilten System alle zeitgesteuerten Aktionen *sparse events* sind, ist die Gleichzeitigkeit von Ereignissen im gesamten System eindeutig bestimmt.

Die globale Zeit kann mit einer externen Zeitbasis, z.B. der GPS (General Positioning System) Zeit synchronisiert werden. GPS ermöglicht eine zeitliche Genauigkeit (accuracy) von besser als 100 nsec. Wenn mehrere autonome Systeme ihre interne globale Zeit mit der GPS Zeit synchronisieren, so kann die Gleichzeitig der Datenerfassung über die Systemgrenzen eines autonomen Systems hinweg realisiert werden.

Erfindungsgemäß müssen die Zeitpläne der zeitgesteuerten Kommunikation mit den Fertigstellungszeitpunkten *zⁱ_{f}* der Task Verarbeitung synchronisiert werden, so dass der Nachrichtentransport unmittelbar nach einem Fertigstellungszeitpunkt *zⁱ_{f}* beginnen kann.

Während alle Zyklen aller Task gleichzeitig beginnen, werden die Fertigstellungszeitpunkte der Tasks nicht gleichzeitig, sondern individuell für jeden Task festgelegt. Die gestaffelten Fertigstellungszeitpunkte der Tasks ermöglichen, dass das Kommunikationssystem die Nachrichten konfliktfrei nacheinander von den Sendern zu den Empfängern transportieren kann. Vorzugsweise wird dem Task mit der größten Rechenaufwand das längste Verarbeitungsintervall < *zⁱb, zⁱ_{f}*> zugewiesen.

Das folgende Beispiel zeigt die typische Größenordnung der Parameter in einer Anwendung:
- Anzahl der Rechnerknoten: 10
- Mittlere Anzahl von Tasks pro Rechnerknoten: 5
- Anzahl von Tasks: 50
- Bandbreite des TTEthernet Kommunikationssystems: 1 Gbit/sec
- Genauigkeit der Uhrensynchronisation: 100 nsec
- Dauer eines Zyklus: 10 msec
- Mittlere Anzahl von Bytes in einer Ergebnisnachricht: 1000
- Dauer des Transports einer Ergebnisnachricht: 10 µsec
- Minimale Verarbeitungsdauer eines Tasks: 9500 µsec
- Maximale Verarbeitungsdauer eines Tasks: 9990 µsec

Wenn die Verarbeitungsdauer eines Tasks, z.B. des Tasks **110,** von der Komplexität der Eingabedaten abhängt, kann der Fall eintreten, dass der Task **110** zum geplanten Fertigstellungseitpunkt *zⁱ_{f}* seine Verarbeitung im Zyklus *i* noch nicht abgeschlossen hat. In diesem Fall bleiben, vorzugsweise entsprechend der Zustandssemantik, die (alten) Ausgabedaten des Zyklus *i-1* im Ausgabebereich **113** erhalten. Der Task **110** setzt seine Verarbeitung in dem folgenden Zyklus *i+1* fort und schreibt die Ergebnisse zum Fertigstellungszeitpunkt *z*^{*i*+}*¹_{f}* in den Ausgabebereich **113.**

Im Ausgabereich **113** wird vorzugsweise ein Datenfeld für einen *Alterungsindex* vorgesehen. Dieser Alterungsindex wird nach dem Lesen der Eingabedaten aus dem Speicherbereich **111** auf Null gesetzt. Wenn der Task **110** zu dem a priori bestimmten Fertigstellungszeitpunkt *zⁱ_{f}* vor dem Ende eines Zyklus die Ergebnisdaten des laufenden Zyklus nicht fertig stellen kann, dann erhöht der verzögernde Task den Alterungsindex um eins. Die Ergebnisdaten des Zyklus *i* werden zum Fertigstellungszeitpunkt *z*^{*i*+}*¹_{f}* des folgenden Zyklus in den Ausgabebereich **113** gestellt. Da der Alterungsindex mit den Ergebnisdaten in der Ergebnisnachricht übertragen wird, kann der zeitlich folgende Task feststellen, dass im vorangegangenen Task **110** eine Verzögerung aufgetreten ist und diese Verzögerung bei der weiteren Verarbeitung berücksichtigen.

Die auf Systemebene festgelegte zeitliche Abarbeitungsreihenfolge der Tasks kann in einem verteilten Echtzeitsystem, in dem die Rechnerknoten *multi-tasking* unterstützen und die über ein zeitgesteuertes Kommunikationssystem kommunizieren, mittels verschiedener *Hardware Allokationen* realisiert werden. Unter der *Hardware Allokation* wird die Zuweisung von Tasks auf die Rechnerknoten, d.i. auf die Hardware verstanden. Je nach dem beobachteten Ressourcenbedarf kann ein Tasks von einem Rechnerknoten, der überlastet ist und wo die Tasks die geplanten Fertigstellungszeitpunkte *zⁱ_{f}* oft überschreiten, einem anderen leistungsfähigeren Rechnerknoten zugewiesen werden. Zu diesem Zweck müssen die Zeitpläne der Task-Aktivierung und der zeitgesteuerten Kommunikation neu konfiguriert werden-die Tasks an sich müssen nicht geändert werden. Die strikte Trennung der Task-Software von der Hardware Allokation und der zeitlichen Planung der Task Aktivierung und der zeitgesteuerten Kommunikation erhöht die Flexibilität und ermöglicht die schnelle Anpassung der Systemkonfiguration an neue Erfordernisse.

In der vorgeschlagenen Architektur ist es auch möglich zur Erhöhung der Zuverlässigkeit mehrere Kopien eines Tasks parallel auszuführen. enn von einem fail-silent Fehlermodell ausgegangen werden kann, so kann auf diese Weise der Ausfall einer Kopie durch die parallel arbeitende Kopie eines Tasks maskiert werden.

### Zitierte Literatur:

[1] US Pat 8,453,151. Manczak. *Method and system for coordinating hypervisor scheduling.* Granted May 28, 2013.
[2] US Pat.Application 20080273527. Short. *Distributed System.* Published November 6, 2008.
[3] Kopetz, H. Real-Time Systems, Design Principles for Distributed Embedded Applications. Springer Verlag. 2011.
[4] SAE Standard von TTEthernet. URL: http://standards.sae.org/as6802

## Patentansprüche

1. Verfahren zur zeitrichtigen Datenübergabe zwischen zyklischen Tasks in einem verteilten Echtzeitsystem, welches Echtzeitsystem ein Echtzeitkommunikationssystem und eine Vielzahl von Rechnerknoten umfasst, wobei eine lokale Echtzeituhr in jedem Rechnerknoten mit der globalen Zeit synchronisiert ist, wobei alle periodischen Trigger-Signale *zⁱ_{b}* für den Beginn eines neuen Zyklus *i* in jedem Rechnerknoten gleichzeitig vom Fortschreiten der globalen Zeit abgeleitet werden, wobei diese periodischen Trigger-Signale die Tasks starten, und wobei ein Task die Ausgabedaten der anderen Tasks aus lokalen Eingabespeicherbereichen, die von dem Echtzeitkommunikationssystem beschrieben werden, liest, und wobei ein Task zu einem *a priori* bestimmten individuellen Fertigstellungszeitpunkt *zⁱ_{f}* vor dem Ende eines Zyklus die Ergebnisdaten des laufenden Zyklus in einen lokalen Ausgabespeicherbereich, der dem Echtzeitkommunikationssystem zugeordnet ist, schreibt, und wobei die Zeitpläne für das zeitgesteuerte Echtzeitkommunikationssystem so konfiguriert sind, dass die im lokalen Ausgabespeicherbereich vorhandenen Ergebnisdaten eines Tasks während des Zeitintervalls *<zⁱ_{f}, z*^{*i*+}*¹_{b}>* in die lokalen Eingabespeicherbereiche der die Daten benötigenden Tasks transportiert werden, sodass am Beginn des folgenden Zyklus diese Ergebnisdaten in den lokalen Eingabespeicherbereichen der Tasks, die diese Ergebnisdaten benötigen, verfügbar sind, und wobei
ein Task nach dem Start einen Alterungsindex auf Null setzt und den aktuellen Wert des Alterungsindex zusätzlich zu den Ergebnisdaten in den Ausgabespeicherbereich, der dem Kommunikationssystem zugeordnet ist, schreibt, und
ein Task, der zu dem *a priori* bestimmten Fertigstellungszeitpunkt zⁱ_{f} vor dem Ende eines Zyklus *i* die Ergebnisdaten des laufenden Zyklus nicht bereit stellen kann, den Alterungsindex um eins erhöht und die Ergebnisdaten zum Fertigstellungszeitpunkt *z*^{*i*+}*¹_{f}* des folgenden Zyklus in den Ausgabereich stellt.

2. Verfahren nach Anspruch 1, **dadurch gekennzeichnet, dass** alle Tasks, die auf ein Sensorsystem zugreifen können, die Sensordaten zu Beginn eines neuen Zyklus gleichzeitig lesen.

3. Verfahren nach Anspruch 1 oder 2, **dadurch gekennzeichnet, dass** die Fertigstellungs-zeitpunkte der Tasks gestaffelt sind.

4. Verfahren nach einem der Ansprüche 1 bis 3, **dadurch gekennzeichnet, dass** dem Task mit dem größten Verarbeitungsaufwand der späteste Fertigstellungszeitpunkt und damit das längste Verarbeitungsintervall zugewiesen wird.

5. Verfahren nach einem der Ansprüche 1 bis 4, **dadurch gekennzeichnet, dass** alle zeitgesteuerten Ereignisse *sparse events* sind.

6. Verfahren nach einem der Ansprüche 1 bis 5, **dadurch gekennzeichnet, dass** die interne globale Zeit mit einer externen Zeitbasis synchronisiert ist.

7. Verfahren nach einem der Ansprüche 1 bis 6, **dadurch gekennzeichnet, dass** die auf Systemebene festgelegte zeitliche Abarbeitungsreihenfolge der kooperierenden Tasks und die Task Software nicht verändert wird, wenn die *Hardware-Allokation* eines oder mehrerer Tasks verändert wird.

8. Verfahren nach einem der Ansprüche 1 bis 7, **dadurch gekennzeichnet, dass** mehrere Kopien eines Tasks gleichzeitig auf unterschiedlichen Rechnerknoten ausgeführt werden.

## Claims

1. A method for the time-correct data transfer between cyclic tasks in a distributed real-time system, the real-time system comprising a real-time communication system and a plurality of computer nodes, wherein a local real-time clock in each computer node is synchronized with the global time, all periodic trigger signals *zⁱ_{b}* for the start of a new cycle *i* in each computer node are derived simultaneously from the advance of the global time, these periodic trigger signals start the tasks, and a task reads the output data of the other tasks from local input memory areas to which the real-time communication system writes, and wherein a task writes the result data of the current cycle to a local output memory area, which is associated with the real-time communication system, at an a *priori* determined individual completion point in time *zⁱ_{f}* prior to the end of a cycle, and the schedules for the time-triggered real-time communication system are configured such that the results data of a task present in the local output memory area are transported to the local input memory areas of the tasks requiring the data during the time interval <zⁱ_{f}, *zⁱ⁺¹_{b}*> so that, at the start of the following cycle, these results data are available in the local input memory areas of the tasks that require these results data, and wherein
a task sets an aging index to zero after the start and, in addition to the results data, writes the current value of the aging index to the output memory area associated with the communication system, and
a task that cannot provide the results data of the current cycle at the a *priori* determined completion point in time *zⁱ_{f}* prior the end of a cycle *i* increases the aging index by one and places the results data in the output area at the completion point in time *z*^{*i*+}*¹_{f}* of the following cycle.

2. The method according to claim 1, **characterized in that** all tasks that can access a sensor system read the sensor data simultaneously at the start of a new cycle.

3. The method according to claim 1 or 2, **characterized in that** the completion points in time of the tasks are staggered.

4. The method a method according to any one of claims 1 to 3, **characterized in that** the latest completion point in time, and therefore the longest processing interval, is assigned to the task having the greatest processing effort.

5. The method according to any one of claims 1 to 4, **characterized in that** all time-triggered events are sparse events.

6. The method according to any one of claims 1 to 5, **characterized in that** the internal global time is synchronized with an external time base.

7. The method according to any one of claims 1 to 6, **characterized in that** the chronological execution sequence of the cooperating tasks defined at the system level and the task software are not changed when the hardware allocation of one or more tasks is changed

8. The method according to any one of claims 1 to 7, **characterized in that** multiple copies of one task are carried out simultaneously on different computer nodes.

## Revendications

1. Procédé pour le transfert de données au temps exact entre des tâches cycliques dans un système en temps réel réparti, lequel système en temps réel comporte un système de communication en temps réel et une pluralité de noeuds d'ordinateurs, suivant lequel une horloge en temps réel locale dans chaque noeud d'ordinateurs est synchronisée avec le temps global, suivant lequel tous les signaux de déclenchement périodiques *zⁱ_{b}* pour le démarrage d'un nouveau cycle *i* sont calculés dans chaque noeud d'ordinateurs simultanément à partir de l'avance du temps global, suivant lequel ces signaux de déclenchement périodiques démarrent les tâches, et suivant lequel une tâche lit les données de sortie des autres tâches à partir de zones de mémoire d'entrée locales, qui sont écrites par le système de communication en temps réel, et suivant lequel une tâche écrit les données de résultat du cycle courant sur une zone de mémoire de sortie locale, qui est associée au système de communication en temps réel, à un instant de production individuel déterminé *a priori zⁱ_{f}* avant la fin d'un cycle, et suivant lequel les plans pour le système de communication en temps réel commandé dans le temps sont configurés de telle sorte que les données de résultat d'un tâche, présentes dans la zone de mémoire de sortie locale, sont transportées dans les zones de mémoire d'entrée locales des tâches nécessitant les données pendant l'intervalle temporel *<zⁱ_{f}, z*^{*i*+}*¹_{b}>,* de telle sorte qu'au démarrage du cycle suivant, ces données de résultat sont disponibles dans les zones de mémoire d'entrée locales des tâches, qui nécessitent ces données de résultat, et suivant lequel
une tâche règle un indice de vieillissement à zéro après le démarrage et, en plus des données de résultat, écrit la valeur courante de l'indice de vieillissement dans la zone de mémoire de sortie, qui est associée au système de communication, et
une tâche, qui ne peut pas fournir les données de résultat du cycle courant à l'instant de production déterminé a *priori zⁱ_{f}* avant la fin d'un cycle *i* augmente l'indice de vieillissement de un et place les données de résultat dans la zone de sortie à l'instant de production *z*^{*i*+}*¹_{f}* du cycle suivant.

2. Procédé selon la revendication 1, **caractérisé par le fait que** toutes les tâches, qui peuvent accéder à un système de capteur, lisent les données de capteur simultanément au démarrage d'un nouveau cycle.

3. Procédé selon l'une des revendications 1 ou 2, **caractérisé par le fait que** les instants de production des tâches sont échelonnés.

4. Procédé selon l'une des revendications 1 à 3, **caractérisé par le fait que** l'instant de production le plus tardif et par conséquent l'intervalle de traitement le plus long sont attribués à la tâche ayant l'effort de traitement le plus grand.

5. Procédé selon l'une des revendications 1 à 4, **caractérisé par le fait que** tous les évènements commandés dans le temps sont des évènements clairsemés.

6. Procédé selon l'une des revendications 1 à 5, **caractérisé par le fait que** le temps global interne est synchronisé avec une base temporelle externe.

7. Procédé selon l'une des revendications 1 à 6, **caractérisé par le fait que** la séquence d'exécution temporelle des tâches coopérantes définie au niveau du système et le logiciel de tâche ne sont pas modifiés lorsque l'attribution de matériel d'une ou plusieurs tâches est modifiée.

8. Procédé selon l'une des revendications 1 à 7, **caractérisé par le fait que** plusieurs copies d'une tâche sont effectuées simultanément sur des noeuds d'ordinateurs différents.
